# EUROPEAN PATENT APPLICATION

(11) **EP 4 837 402 A1**
(43) Date of publication of application: **11.11.2026**
(21) Application number: 25175337.2
(22) Date of filing: 09.05.2025
(51) Int. Cl.: A01C 5/06, A01C 7/04, A01C 7/20

(54) **SEEDING SECTION FOR A SEEDER**

(71) Applicant: Czajkowski Maszyny Sp. z o.o., 87-400 Sokolowo (PL)
(72) Inventor: Czajkowski, Maciej, Sokolowo (PL)
(74) Representative: Wroblewski, Marcin Jan

(57) **Abstract**

The seeding section (1) comprising at least one support wheel (3) mounted on at least one support wheel bracket (4), at least one support-and-press wheel (5) mounted on at least one support-and-press wheel bracket (6), a seed coulter (7) connected to a coulter bracket (8), and a seed dispenser (11), wherein the support wheel (3) is connected to the coulter bracket (8) via the support wheel bracket (4), and the support-and-press wheel (5) is connected to the coulter bracket (8) via the support-and-press wheel bracket (6). The support wheel (3), support wheel bracket (4), support-and-press wheel (5), and support-and-press wheel bracket (6) form a ground-copying apparatus, wherein the support wheel bracket (4) and the support-and-press wheel bracket (6) are pivotally connected to the coulter bracket (8), and the support wheel bracket (4) and the support-and-press wheel bracket (6) are connected by an angle adjustment element (13) for adjusting the angle between the support wheel bracket (4) and the support-and-press wheel bracket (6), wherein at least one actuator (14) is located between the support wheel bracket (4) and the coulter bracket (8) to dampen the ground-copying apparatus.

## Description

### Field of art

The subject of the invention is a seeding section designed to be mounted on the frame of a seed drill or on the frame of a seeder attachment, intended for sowing various types of seeds. During operation, a variable number of seeding sections may be mounted on the frame of the seed drill or the seeder attachment, depending on their size.

### State of the art

Patent description PL214280B1 discloses a seed drill with a container mounted on the frame. The frame is connected to seed metering devices by two parallel rods. The seeding section is equipped with an auxiliary container, a furrow opener, a metering device, and a closing device.

Patent description PL236885B1 discloses a seeding section with a movable frame connected to a fixed frame by an upper parallel rod and a lower parallel rod. The section is equipped with a metering device, a closing device, a support wheel, and a seed coulter, all mounted on the movable frame. The support wheel is connected to the movable frame by a support wheel bracket, and the connection between the bracket and the frame allows for vertical adjustment and positioning of the bracket relative to the movable frame.

Patent description PL241795B1 discloses a seeding section comprising a support wheel, a support-and-press wheel, a support-and-press wheel arm, and a seed coulter connected to a coulter bracket. The coulter bracket is connected to the fixed frame by an upper parallel rod and a lower parallel rod. The support wheel is connected to the coulter bracket by a support wheel arm, while the support-and-press wheel is connected to the coulter bracket via a support-and-press wheel arm, which is pivotally connected to the bracket. Moreover, the support wheel arm and the support-and-press wheel arm are connected by a variable-length element, so that any change in the length of this element alters the angle between the support wheel arm and the support-and-press wheel arm.

Seeding sections known from the prior art are subject to considerable loads during operation, which cause excessive vibrations. These vibrations reduce the service life and, consequently, increase the failure rate of such devices. The vibrations also negatively affect the ground copying, making it difficult to maintain a consistent seeding depth.

The aim of the invention is to develop a seeding section design that improves existing solutions and does not have the above-mentioned drawbacks.

### The Essence of the Invention

The subject of the invention is a seeding section comprising at least one support wheel mounted on at least one support wheel bracket, at least one support-and-press wheel mounted on at least one support-and-press wheel bracket, as well as a seed coulter connected to a coulter bracket and a seed dispenser. The support wheel is connected to the coulter bracket via the support wheel bracket, while the support-and-press wheel is connected to the coulter bracket via the support-and-press wheel bracket. The support wheel, support wheel bracket, support-and-press wheel, and support-and-press wheel bracket together form a ground-copying apparatus. Moreover, the support wheel bracket and the support-and-press wheel bracket are pivotally connected to the coulter bracket, and they are also connected by an angle adjustment element that regulates the angle between the support wheel bracket and the support-and-press wheel bracket. Additionally, at least one actuator is positioned between the support wheel bracket and the coulter bracket to dampen the vibrations of the ground-copying apparatus.

The use of a actuator in the ground-copying apparatus has a positive effect on ground copying and lateral levelling of the device, allowing for consistent seeding depth regardless of soil type, even on uneven surfaces. It also contributes to stabilising the entire system and damping vibrations during operation, which significantly extends the service life of the seeding section. Furthermore, locating the actuator between the support wheel bracket and the coulter bracket contributes to reducing the section's length, which in turn facilitates transport of the section, seed drills, and seeder attachments equipped with sections according to the invention.

Preferably, the coulter bracket is connected to the section mounting via at least one upper parallel rod and at least one lower parallel rod.

Preferably, the actuator for regulating ground pressure is positioned between at least one upper parallel rod and at least one lower parallel rod. This configuration allows for adjustment of the pressure exerted by the section on the ground. Additionally, placing the actuator between the upper and lower parallel rods also dampens vibrations during transport, which has a positive impact on the service life of the seeding section 1.

Preferably, the seeding section includes a load sensor, most preferably in the form of a strain gauge. The use of a load sensor allows for the measurement of the force exerted by the support wheel bracket on the support-and-press wheel bracket. This force measurement is used to control the operation of the actuator regulating ground pressure, in order to maintain the appropriate seeding depth despite variations in terrain geometry and structure. For example, when the section sinks into loose soil, such as sand, the actuator compensates by relieving the pressure on the section. Conversely, when the section lifts on compacted soil, such as clay, the actuator increases the pressure to ensure consistent seeding depth.

Preferably, the seed dispenser takes the form of a belt feeder, an elevator feeder, or a pipe.

Preferably, the seeding section includes a seed container.

Preferably, the seeding section includes a singulation mechanism, which enables spot sowing.

Preferably, the seeding section according to the invention includes a seed press element, such as a flat-faced press tab or a seed firming wheel, mounted to the coulter. The use of either of these components allows the seed to be pressed directly into the soil immediately after placement, creating optimal conditions for capillary rise. This ensures uniform swelling and germination over time, resulting in even emergence at the same stage of growth.

Preferably, the seeding section according to the invention includes at least one harrowing finger mounted on the support-and-press wheel bracket. The use of this element loosens the upper soil layer preventing the formation of a hard crust which restricts seed germination.

Preferably, the seeding section according to the invention includes at least one spiked closing wheel mounted on the support-and-press wheel bracket, positioned either in front of and/or behind the support-and-press wheel. The spiked closing wheel covers the seeds with loosened soil, ensuring that the seed is covered by only a small amount of earth, which allows the soil to warm up quickly and accelerates emergence. When spiked closing wheels are used, the seeds are closed from the sides rather than directly from above, which prevents the formation of a soil crust directly over the seed. This facilitates water absorption. Due to strong contact with the surrounding soil, a microclimate is able to form within the seedbed recess, providing insulation against frost and wind. Preferably, the spiked closing wheel features adjustable tilt relative to the soil surface, as well as pressure regulation.

### Advantages of the invention

The seeding section according to the invention enables consistent seeding depth to be maintained regardless of soil type, even on uneven surfaces. Stabilising the entire system and damping vibrations during operation significantly extends the service life of the device. Furthermore, placing a actuator between the support wheel bracket and the coulter bracket allows the section to be compressed, thereby reducing its size and facilitating transport of both the section itself and seed drills equipped with sections according to the invention. The ability to adjust the positions of the support wheel and the support-and-press wheel relative to the coulter bracket allows for seeding depth regulation. In addition, the use of a support-and-press wheel enables the firming of seeds and the formed furrow. The seeding section according to the invention enables efficient sowing of various seed types.

### Drawing description

The subject of the invention is shown in example embodiments in the drawing, in which:

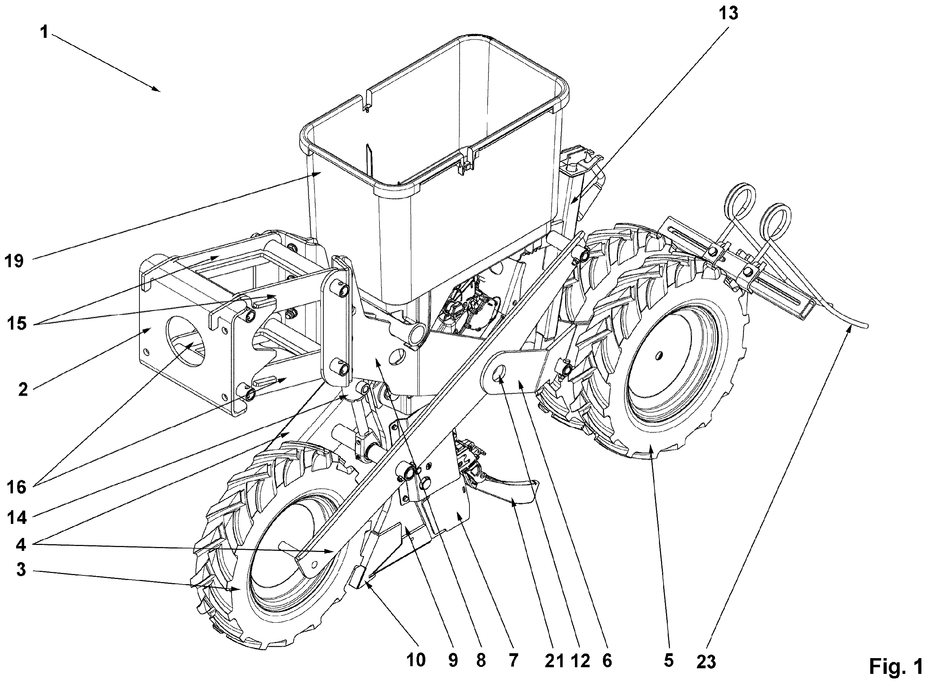

- Fig. 1 -: shows an axonometric view of the seeding section with a flat-faced press tab;

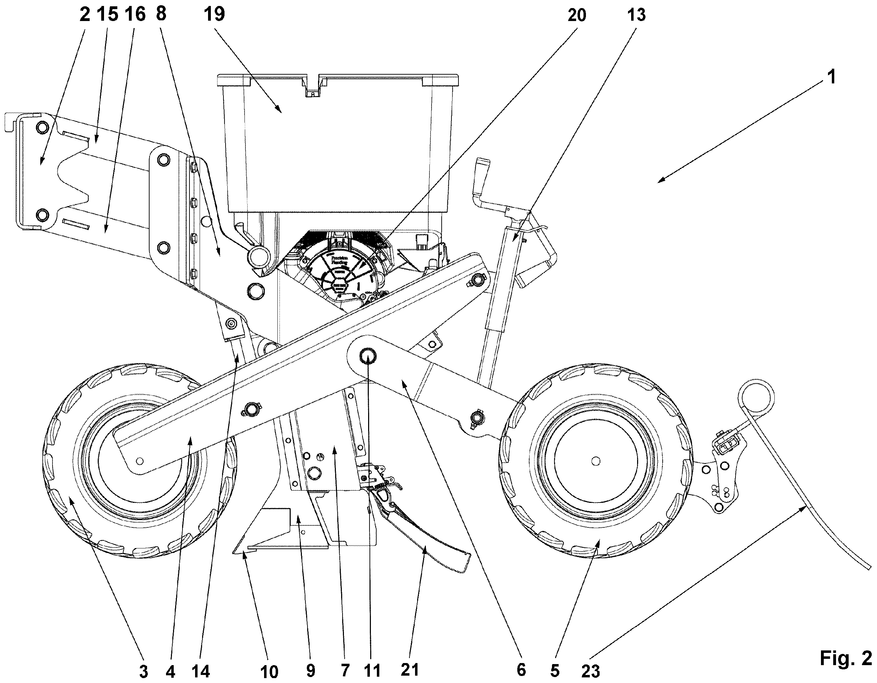

- Fig. 2 -: shows a side view of the seeding section with a flat-faced press tab;

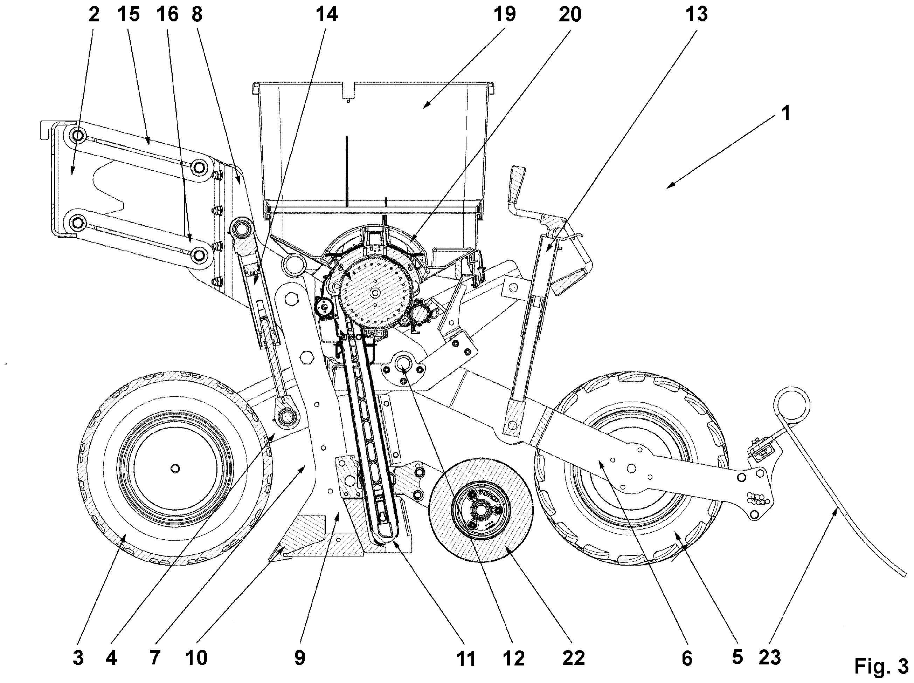

- Fig. 3 -: shows a longitudinal section view of the seeding section according to the first embodiment, with a seed firming wheel and a belt feeder;

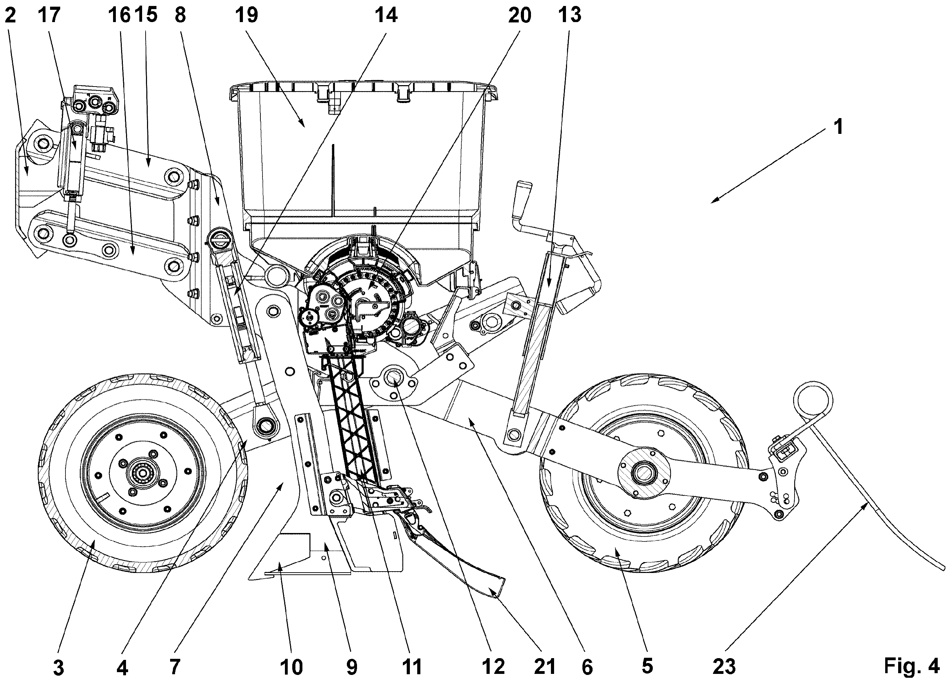

- Fig. 4 -: shows a longitudinal section view of the seeding section with a flat-faced press tab, a ground pressure-regulating actuator, and an elevator feeder;

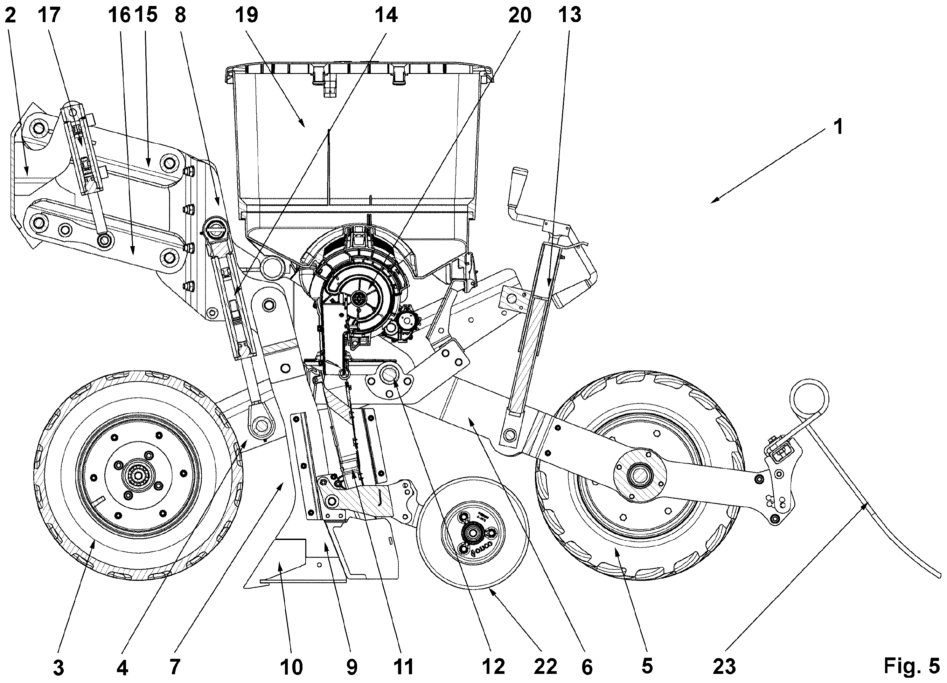

- Fig. 5 -: shows a longitudinal section view of the seeding section with a seed firming wheel, a ground pressure-regulating actuator, and a pipe-type feeder;

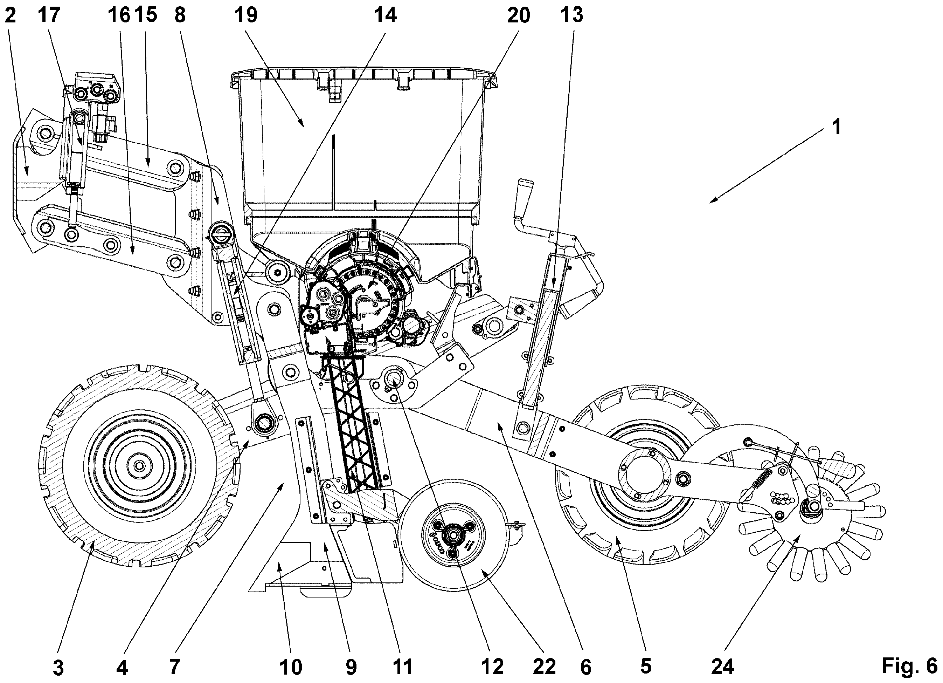

- Fig. 6 -: shows a longitudinal section view of the seeding section with a seed firming wheel, a ground pressure-regulating actuator, an elevator feeder, and a spiked closing wheel;

### Detailed description of the invention

### First embodiment

The seeding section 1 includes a mount 2 for attaching the seeding section 1 to the frame of a seed drill, a support wheel 3 mounted on support wheel brackets 4, and support-and-press wheels 5 mounted on a support-and-press wheel bracket 6, as well as a seed coulter 7 connected to a coulter bracket 8. The support wheel bracket 4 and the support-and-press wheel bracket 6.

The coulter 7, comprising a tine 9 and a chisel 10, is preferably detachably connected to the coulter bracket 8. The tine 9 and the chisel 10 are preferably connected in a detachable manner as well. These detachable connections allow individual elements to be replaced as they wear out, without requiring the replacement of the entire coulter.

The seeding section 1 also includes a seed dispenser 11 connected to the tine 9. Depending on the embodiment, the seed dispenser 11 may, for example, take the form of a pipe, a belt feeder, or an elevator feeder.

The support wheel 3 is connected to the coulter bracket 8 by the support wheel bracket 4. The support-and-press wheels 5 are connected to the coulter bracket 8 via the support-and-press wheel bracket 6. The support wheel bracket 4, the support-and-press wheel bracket 6, and the coulter bracket 8 are pivotally connected to one another. In this embodiment, the connection is implemented by mounting these components on an axle 12. In other embodiments, different methods of providing a pivotable connection between these components may be used.

Additionally, the support wheel bracket 4 and the support-and-press wheel bracket 6 are connected by an element 13 for adjusting the angle between the support wheel bracket 4 and the support-and-press wheel bracket 6.

The seeding section 1 enables sowing at a consistent and appropriate depth. The operating level of the seed coulter is determined by setting the appropriate angle between the support wheel bracket 4 and the support-and-press wheel bracket 6. Changing the angle between the support wheel bracket 4 and the support-and-press wheel bracket 6 alters the position of the coulter 7 and the coulter bracket 8 relative to the support wheel 3 and the support-and-press wheels 6, thereby changing the seeding depth.

The angle adjustment element 13 between the support wheel bracket 4 and the support-and-press wheel bracket 6 may, for example, take the form of a turnbuckle, a worm gear mechanism, etc. The use of this element enables quick adjustment of the sowing depth and calibration, which significantly facilitates the operator's work. As a result, the seeding section 1 does not undergo sudden changes in the position of the coulter 7 when one of the wheels passes over uneven ground.

An actuator 14 is positioned between the support wheel bracket 4 and the coulter bracket 8 to dampen vibrations in the ground-copying apparatus. The use of a actuator 14 in the ground-copying apparatus has a positive effect on ground copying and longitudinal levelling of the device, allowing for consistent seeding depth regardless of soil type, even on uneven surfaces. It also contributes to stabilising the entire system and damping vibrations during operation, which significantly extends the service life of the seeding section. Furthermore, placing the actuator 14 between the support wheel bracket 4 and the coulter bracket 8 enables the section to be shortened, thereby facilitating the transport of the section itself as well as seed drills or seeder attachments equipped with sections according to the invention.

### Second embodiment

The seeding section is as in the first embodiment, with the difference that the coulter bracket 8 is connected to the section mounting 2 by upper parallel rods 15 and lower parallel rods 16, with a actuator 17 positioned between the upper parallel rods 15 and the lower parallel rods 16 to regulate the pressure of the seeding section 1 against the ground. The use of the actuator 17 between the upper parallel rod 15 and the lower parallel rod 16 enables adjustment of the pressure applied by the section to the ground. The use of the actuator 17 between the upper parallel rods 15 and the lower parallel rods 16 also provides vibration damping during transport, which positively affects the service life of the seeding section 1.

### Third embodiment

The seeding section is as in the first embodiment, with the difference that the seeding section 1 also includes a load sensor 18, preferably in the form of a strain gauge. The load sensor 18 is preferably mounted between the angle adjustment element 13, used to regulate the angle between the support wheel bracket 4 and the support-and-press wheel bracket 6, and either the support wheel bracket 4 and/or the support-and-press wheel bracket 6.

During the operation of the seeding section 1, the section load sensor 18 measures the pressure force exerted by the support wheel bracket 4 on the support-and-press wheel bracket 6. The measurement of the pressure force exerted by the support wheel bracket 4 on the support-and-press wheel bracket 6 is used to control the actuator 17, which regulates the pressure of the seeding section 1 against the ground, in order to maintain the correct seeding depth despite changing ground geometry and structure.

### Fourth embodiment

The seeding section 1, according to any of the previous embodiments, differs in that it includes a seed container 19, preferably mounted on the coulter bracket 8.

### Fifth embodiment

The seeding section 1, according to any of the previous embodiments, differs in that it includes a seed singulation mechanism 20, which enables spot sowing.

### Sixth embodiment

The seeding section 1, according to any of the previous embodiments, differs in that it includes either a flat-faced press tab 21 or a seed firming wheel 22 for pressing the seed, both mounted to the coulter 7.

### Seventh embodiment

The seeding section 1, according to any of the previous embodiments, differs in that it includes at least one harrowing finger 23 mounted on the support-and-press wheel bracket 6, located behind the support-and-press wheel 5.

### Eighth embodiment

The seeding section 1, according to any of the embodiments from 1 to 6, differs in that it includes at least one spiked closing wheel 24 mounted on the support-and-press wheel bracket 6 and positioned behind the support-and-press wheel 5. The spiked closing wheel 24 covers the seeds with loosened soil, ensuring that the seed is covered by only a small amount of earth, which allows the soil to warm up quickly and accelerates emergence. When spiked closing wheels 24 are used, the seeds are closed from the sides rather than directly from above, which prevents the formation of a soil crust directly over the seed. This facilitates water absorption. Due to strong contact with the surrounding soil, a microclimate is able to form within the seedbed recess, providing insulation against frost and wind.

## Claims

1. A seeding section (1) comprising:
- at least one support wheel (3), mounted on at least one support wheel bracket (4),
- at least one support-and-press wheel (5), mounted on at least one support-and-press wheel bracket (6),
- a coulter (7) connected to a coulter bracket (8), and a seed dispenser (11),
wherein:
- the support wheel (3) is connected to the coulter bracket (8) by the support wheel bracket (4),
- the support-and-press wheel (5) is connected to the coulter bracket (8) by the support-and-press wheel bracket (6), and
wherein:
- the support wheel (3), the support wheel bracket (4), the support-and-press wheel (5), and the support-and-press wheel bracket (6) together form the ground-copying apparatus,
- the support wheel bracket (4) and the support-and-press wheel bracket (6) are pivotally connected to the coulter bracket (8), and
- the support wheel bracket (4) and the support-and-press wheel bracket (6) are connected by an element (13) for adjusting the angle between the support wheel bracket (5) and the support-and-press wheel bracket (6),
**characterised in that:**
at least one actuator (14) is positioned between the support wheel bracket (4) and the coulter bracket (8) to dampen the vibrations of the ground-copying apparatus.

2. The seeding section according to claim 1, **characterised in that** the coulter bracket (8) is connected to the section mounting (2) via at least one upper parallel rod (15) and at least one lower parallel rod (16).

3. The seeding section according to claim 2, **characterised in that** an actuator (17) for regulating ground pressure is positioned between at least one upper parallel rod (15) and at least one lower parallel rod (16).

4. The seeding section according to claim 3, **characterised in that** it includes a load sensor (18), preferably in the form of a strain gauge.

5. The seeding section according to any one of claims 1 to 4, **characterised in that** the seed dispenser (11) is in the form of a belt feeder, elevator feeder, or tube.

6. The seeding section according to any one of claims 1 to 5, **characterised in that** it includes a seed container (19).

7. The seeding section according to any one of claims 1 to 6, **characterised in that** it includes a seed singulation device (20).

8. The seeding section according to any one of claims 1 to 7, **characterised in that** it includes a flat-faced press tab (21) or a seed firming wheel (22) mounted to the coulter (7).

9. The seeding section according to any one of claims 1 to 8, **characterised in that** it includes at least one harrowing finger (23) mounted on the support-and-press wheel bracket (6).

10. The seeding section according to any one of claims 1 to 9, **characterised in that** it includes at least one spiked closing wheel (24) mounted on the support-and-press wheel bracket (6), positioned in front of and/or behind the support-and-press wheel (5).
